# EUROPEAN PATENT APPLICATION

(11) **EP 1 843 609 A2**
(43) Date of publication of application: **10.10.2007**
(21) Application number: 07007003.2
(22) Date of filing: 03.04.2007
(51) Int. Cl.: H04Q 7/24

(54) **Data conversion**

(30) Priority: 04.04.2006 US 397325
(71) Applicant: Bridgeport Networks, Inc., Chicago IL 60601 (US)
(72) Inventor: Han, Wen K., Lexington Massachusetts 02420 (US); Blumenthal, Steven H., Lexington Massachusetts 02421 (US)
(74) Representative: Müller-Boré & Partner Patentanwälte

(57) **Abstract**

Voice communication between a mobile station and a packet-based voice communication system is handled. A communication interface for mobile station access to a telecommunication network over a public data network according to a first protocol is emulated at a gateway system. Communications pass between the gateway and the packet-based voice communication system according to a second protocol. Control communication information passing between the mobile station and the packet-based voice communication system is converted.

## Description

### BACKGROUND

This description relates to data conversion.

Unlicensed Mobile Access (UMA) technology provides access to GSM and GPRS mobile services over unlicensed spectrum technologies, including Bluetooth and 802.11. By deploying UMA technology, service providers can enable subscribers to roam and handover between cellular networks and public and private unlicensed wireless networks using dual-mode mobile handsets.

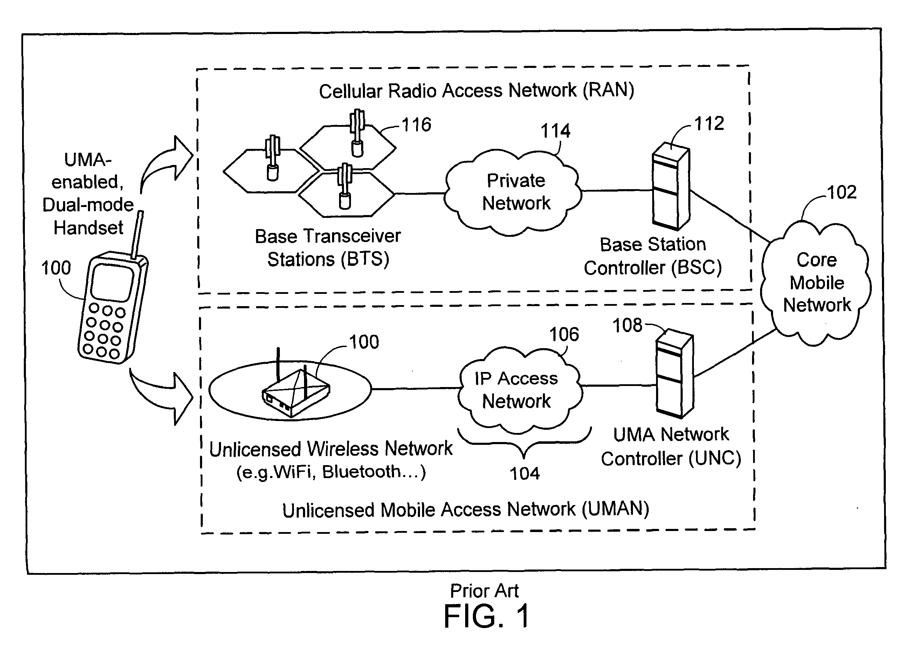

Referring to Figure 1, network protocols transport legacy GSM/GPRS voice/data bearer and signaling traffic between a UMA mobile station (MS) 100 and a GSM/GPRS mobile network 102. In some examples, the mobile station 100 connects to a base transceiver station 116 to transmit traffic to the mobile network 102 through a private network 114. In some examples, the mobile station 100 connects to an access point 110 to transmit the traffic inside a secured IP tunnel (IPSec) 104 across a public data network (e.g., Internet) 106. A UMA Network Controller (UNC) 108 acts as the Base Station Controller (BSC) for MS 100 from the point of view of the mobile network 102. The UNC 108 terminates the IPSec tunnels from MS 100 and presents the GSM/GPRS voice/data bearer and signaling to a Mobile Switching Center in the core mobile network 102. This allows traditional/legacy GSM/GPRS networks to treat UMA mobile devices as regular GSM/GPRS mobile devices. An access point 110, such as a standard wireless router, or computer, carries traffic using unlicensed spectrum technologies from MS 100 to IPSec 104, through which the traffic is transmitted across IP network 106 to UNC 108.

The protocols that control the calls and manage the mobility in UMA are based on legacy circuit-switched GSM and packet-switched GPRS. The IP network 106 is only used as a means to transport the legacy protocols between the mobile devices and the networks. Voice/data bearer and signaling traffic are still processed by and traverse through the legacy GSM/GPRS network elements, which are not architected to take full advantage of the higher bandwidths made possible by the unlicensed spectrum technologies.

An IMS, or IP Multimedia Subsystem, is an element in a Third Generation (3G) network architecture that merges cellular networks and the Internet. IMS allows a user to access internet services, such as accessing web pages, reading emails, watching a movie, or taking part in a videoconference, using a 3G hand-held device.

Although IMS is not yet widely available, IP PBX and IP Centrex provide Voice-over-IP communications and support traditional private branch office and centrex voice features as well as services over IP networks.

The protocols that control calls and manage mobility in IMS are based on SIP (Session Initiation Protocol). IP PBX and IP Centrex are also based on SIP and other IP-based protocols. SIP was specified by the IETF as a protocol to establish and manage multimedia sessions over IP networks, and follows a client-server model used by many protocols developed by the IETF. It requires a SIP Client running in the end user mobile device interacting with Application Servers in the IMS. To access IMS services, IP PBX and IP Centrex from UMA mobile devices, the UMA mobile device runs a SIP Client.

### SUMMARY

In general, in one aspect, voice communication between a mobile station and a packet-based voice communication system is handled. A communication interface for mobile station access to a telecommunication network over a public data network according to a first protocol is emulated at a gateway system. Communications pass between the gateway and the packet-based voice communication system according to a second protocol. Control communication information passing between the mobile station and the packet-based voice communication system is converted.

Implementations may include one or more of the following features. The packet-based voice communication system is an IP Centrex. The packet-based voice communication system is an IP PBX. The packet-based voice communication system is an IMS-based telecommunication system. The first protocol is UMA. The second protocol is SIP. Converting the control communication includes translating between a GSM and/or GPRS messages and SIP messages.

In general, in one aspect, a data network service is accessed from a mobile terminal. A gateway is provided for converting control communications received from the mobile terminal from a first protocol to a second protocol, where the second protocol is compatible with the service.

Implementations may include one or more of the following features. The mobile terminal accesses the data network service over a wireless telecommunication network. The mobile terminal is a UMA terminal.

Commercial UMA mobile devices will soon be available in volume. The solutions described herein enable a UMA user to access IMS services, IP PBX and IP Centrex without any changes to the infrastructure of the device, as an SIP client is not required on the UMA device. Deployment of IMS is accelerated by taking advantage of UMA dual-mode phones. UMA mobile devices can access IMS and IP PBX/Centrex services, without any change to the UMA handsets, or any change to GSM and IMS/SIP services or protocols.

The details of one or more embodiments of the invention are set forth in the accompanying drawings and the description below. Other features, objects, and advantages of the invention will be apparent from the description and drawings, and from the claims.

### DESCRIPTION

FIGs. 1, 2, and 3 show networks.
FIG 4 and FIG 5 show protocol architectures
FIG 6 and FIG 7 show flow charts.

The following terms are used in this description :
- AS: Application Server
- BSC: Base Station Controller
- CAMEL: Customized Applications for Mobile network Enhanced Logic
- CSCF: Call/Session Control Function
- DHCP: Dynamic Host Configuration Protocol
- GMSC: Gateway MSC
- GPRS: General Packet Radio Service
- GSM: Global System for Mobile communications
- HLR: Home Location Register
- IMS: IP Multimedia System
- IMS AS: IP Multimedia System Application Server
- IP Sec: Secured IP tunnel
- MGW: Media Gateway
- MSC: Mobile service Switching Centre
- MS: Mobile Station
- NCG: Network Convergence Gateway
- PLMN: Public Land Mobile Network
- PSTN: Public Switched Telephone Network
- STP: Spanning Tree Protocol
- UMA: Unlicensed Mobile Access
- VLR: Visitor Location Register
- VMSC: Visited MSC
- VPLMN: Visited PLMN

We describe a UMA-to-SIP convergence gateway that bridges communication between UMA mobile devices and other communication systems including, for example, IMS based wireless networks and IP PBX/Centrex services. By using such a UMA-to-SIP gateway, the mobile devices can participate in SIP-based communication session without using a SIP client that is hosted in the mobile devices.

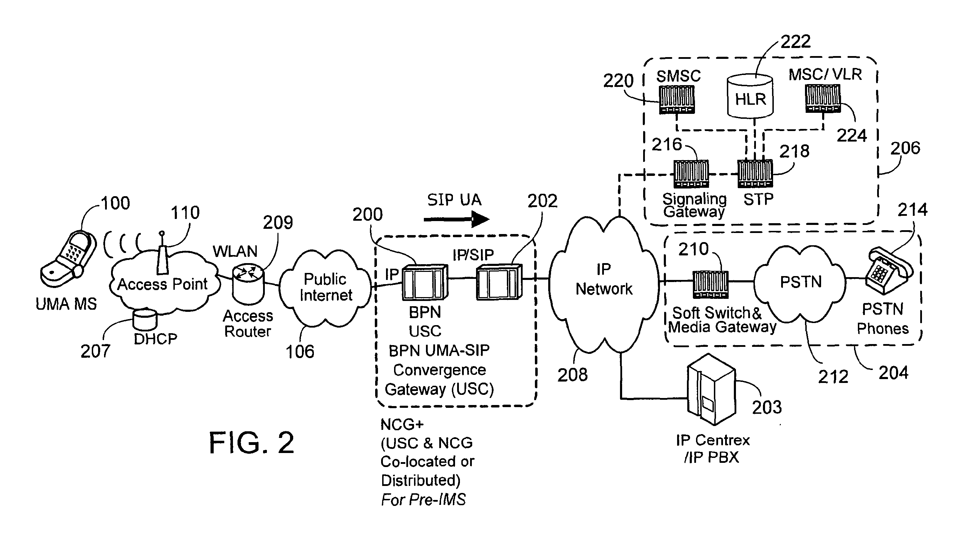

Referring to Figure 2, a USC Gateway 200 communicates with the UMA mobile station (MS) 100 such that, from the point of view of the MS 100, the USC Gateway 200 functions as a standard UMA Network Controller (UNC), and therefore standard UMA functionality hosted in the mobile device is suitable for communication with the USC Gateway 200. In particular, the MS 100 connects to an access point 110 and obtains an IP address from a Dynamic Host Configuration Protocol (DHCP) server 207 to communicate with the Internet 106 over an access router 209. MS 100 interacts with a USC Gateway 200 that follows UMA specific protocols and is compliant to UMA specifications that govern UMA mobile device to UNC interface interactions. The USC Gateway 200 interacts with SIP-based communication systems, such as an IP PBX or IP Centrex system 203, through NCG 202 as if it were functioning as an SIP User Agent from the point of view of such systems.

USC Gateway 200 can also can establish traditional network connections with a PSTN network 204 or a standard mobile network 206. The connections are established using standard methods, through an IP Network 208. In some examples, USC 200 connects to a Soft Switch & Media Gateway 210 to transmit data to a standard PSTN phone 214 over a PSTN network 212. In some example, USC 200 connects to a signaling gateway 216 through NCG 202 to transmit data over an STP server 218 in the mobile network 206. The STP server 218 has access to an SMSC server 220, a Home Location Register (HLR) server 222, and an MSC 224.

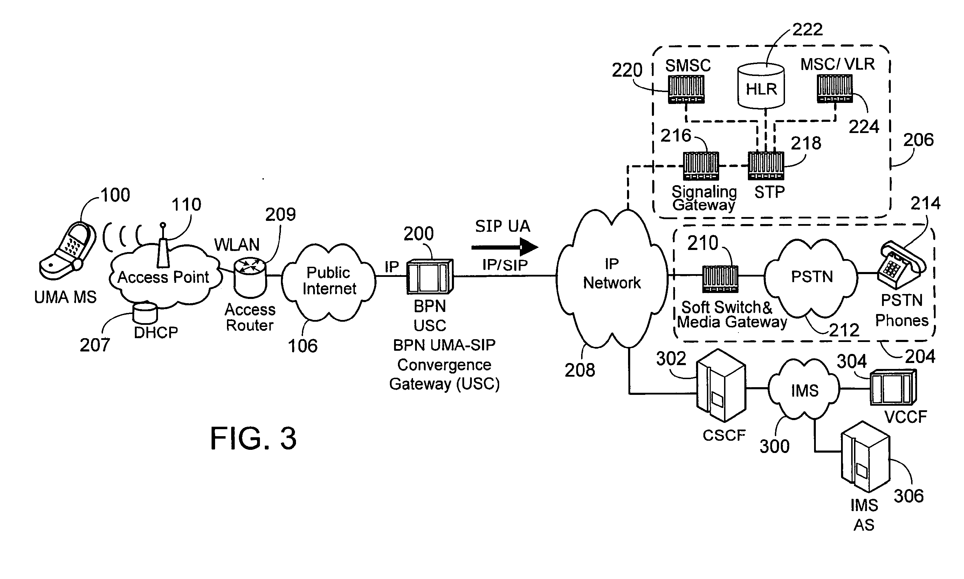

Referring to Figure 3, USC Gateway 200 interacts with MS 100 on one end and with an IMS network 300 on the other side. In this network architecture, an NCG device is not required for traffic routing.

Again, from the point of view of the IMS network 300, the USC Gateway 200 behaves like a SIP User Agent (SIP Client) on behalf of MS 100. It translates and converts legacy GSM circuit-switched interactions with MS 100 into IP-based SIP and IMS compliant protocols used in IMS and IP PBX/Centrex services. USC 200 can communicate with a Call/Sesion Control Function (CSCF) server 302, an IMS Application Server (AS) 306, and a VCCF server 304 in the IMS network 300. To IMS AS 306 and IP PBX/Centrex 203, UMA mobile device appear just like any other SIP/IMS client.

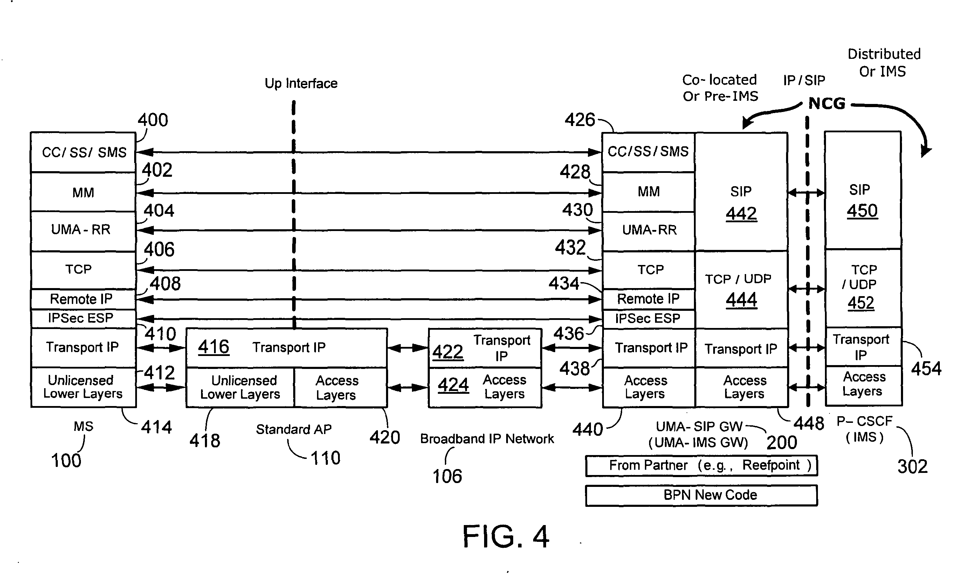

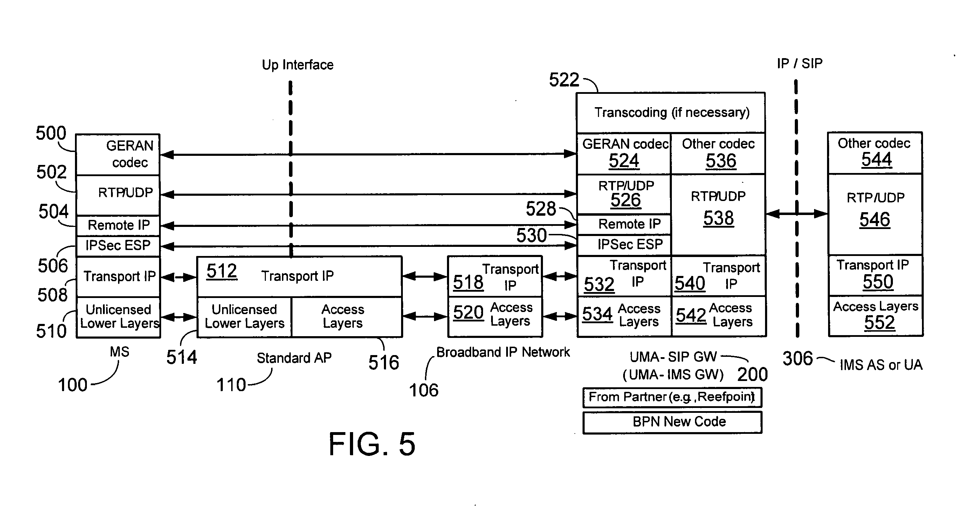

System and protocol architectures of the USC Gateway are shows in Figure 4 and Figure 5. Referring to Figure 4, a MS 100 has protocol modules 400, 402, 404, 406, 408, 410, 412, and 414 containing control data. Modules 412 and 414 provide data to peer communication modules 416 and 418 within the standard access point 110. The module 418 processes data from unlicensed lower layers to access layers 420 and provides the data to protocol modules 422 and 424 in the IP network 106. The IP Network 106 forwards the data to peer protocol modules 438 and 440 in the USC 200. Protocol modules 400, 402, 404, 406, 408, and 410 also forward data to peer protocol modules 426, 428, 430, 432, 434, and 436 in the USC 200. The USC 200 processes data in modules 426,428, and 430 and rebundles the data as SIP in protocol module 442. The USC 200 processes data in modules 432, 434, and 436 and rebundles the data as TCP/UDP in protocol module 444. The USC 200 forwards the data in protocol modules 442, 444, 445, and 448 to modules 450, 452, 454, and 456 in the CSCF server 302 to be forwarded through the IMS network 300.

Referring to Figure 5, a MS 100 has protocol modules 500, 502, 504, 506, 508, and 510 containing voice bearer data. Modules 508 and 510 provide data to peer communication modules 512 and 514 within the standard access point 110. Data in module 514 is processed from unlicensed lower layers to access layers 516. The access point 110 provides the data in modules 512 and 516 to protocol modules 518 and 520 in the IP network 106. The IP Network 106 forwards the data to peer protocol modules 532 and 534 in the USC 200. Protocol modules 500, 502, 504, and 506 also forward data to peer protocol modules 524, 526, 528, and 530 in the USC 200. The USC 200 processes GERAN codec data in module 524 into other codec data 536. The USC 200 processes data in modules 526, 528, and 530 and rebundles the data as RTP/UDP in protocol module 538. Protocol module 522 assists with transcoding if necessary. The USC 200 forwards the data in protocol modules 536, 538, 540, and 542 to modules 536, 538, 540 and 542 in the IMS application server 306 to be forwarded through the IMS network 300.

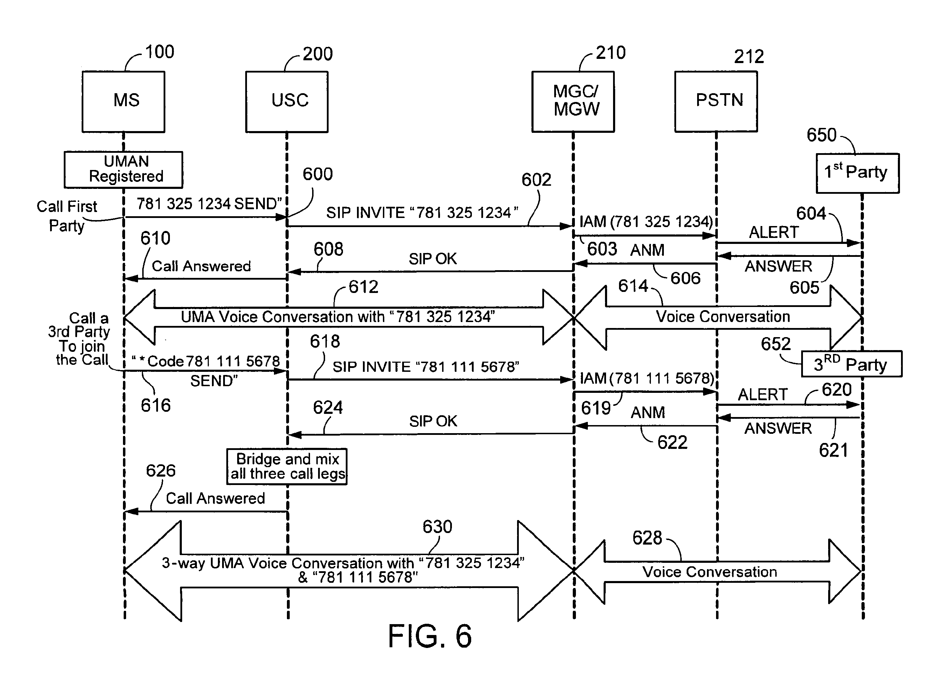

Referring to Figure 6, supplementary services such as three-way calling can be implemented for a UMA mobile station 100. This technique allows for more sophisticated call flows to implement scenarios in which a dedicated IMS Conference Call Application Server 306or an IP PBX/IP Centrex 203 performs the conference call management and control. Such an IMS Conference Call Application Server would reside in the IMS domain as shown as "IMS AS" in Figure 3. The IP PBX/IP Centrex case would be as shown in Figure 2. In both the IMS and IP PBX/IP Centrex cases, the USC Gateway converts legacy GSM protocols (e.g., sending star codes over legacy GSM communication channel) into SIP/IMS compliant protocol messages, inter-working with IMS and IP PBX/IP Centrex.

In some examples, a UMA mobile station (MS) 100 dials a telephone number to call a first party 650 (Step 600). The USC Gateway 200 receives the dialed number and sends an SIP invite to the appropriate Media Gateway (MGW) 210 (Step 602), which forwards the invite on to a PSTN 212 (Step 603). The PSTN 212 sends an alert to the first party 650 (Step 604), who then answers the call (Step 605). The PSTN 212 returns an ANM message to the MGW 210 (Step 606), which forwards a SIP OK message back to USC Gateway 200 (Step 608). USC Gateway sends a "Call Answered" message back to MS 100 (Step 610) and sets up the call with the first party as a UMA conversation (Step 612). The conversation segment between MGW 210 and MS2 650 is initiated as a voice conversation using standard techniques (Step 614).

While on the active call with the first party, the subscriber 115 can initiate three-way calling by inviting another third party 652 to join the call. In some examples, the subscriber dials a star code (e.g., "*3") to indicate that he wishes to initiate three-way calling, followed by a telephone number (e.g., "781 111 5678") for the third party 652 (Step 616). In some examples, the USC Gateway 200 does the call bridging and voice media stream mixing to set up the three-way calling. The USC Gateway 200 uses standard techniques to initiate the call with the third party 652, sending an SIP invite to the appropriate MGW 210 (Step 618), who sends an IAM message to the appropriate PSTN 212 (Step 619), which sends an alert to the third party 652 (Step 620). The third party 652 answers (Step 621), and the PSTN 212 sends an ANM message back to the MGW 210 (Step 622). MGW 210 sends an SIP OK message back to the USC Gateway 200 (Step 624). USC Gateway 200 then mixes all three call legs among the parties and sends a "Call Answered" message back to MS 100 (Step 626). The call leg between the third party 652 and MGW 210 is set up as a Voice Conversation (628), while the call leg between MS 100 and MW 210 is a UMA conversation (Step 630).

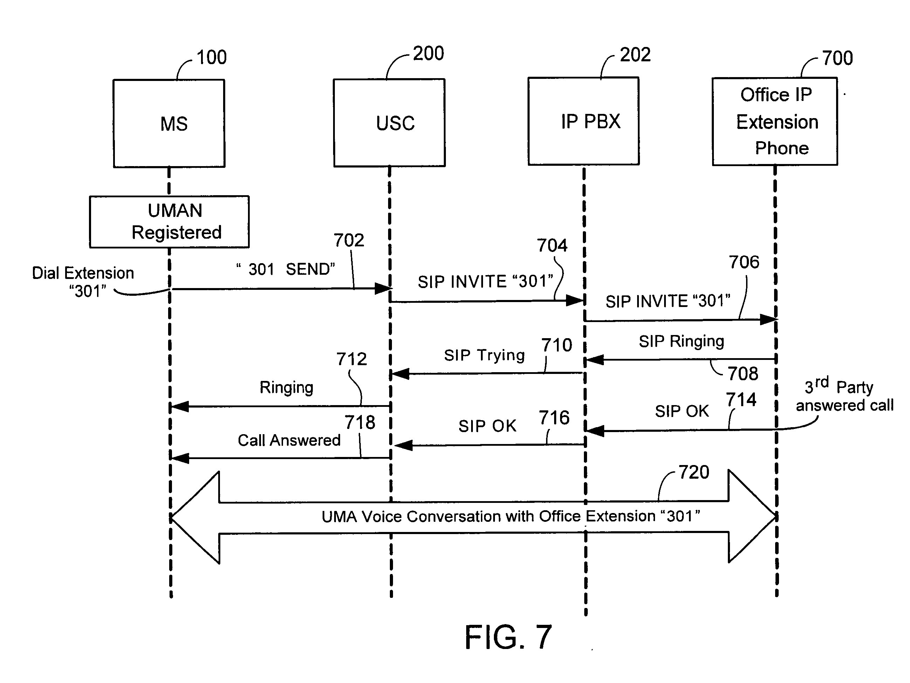

Referring to Figure 7, a UMA Handset 100 can act as an IP PBX Extension Phone for Mobile PBX Services. In some examples, the USC Gateway 200 makes the UMA handset into a mobile IP PBX extension phone. By simply configuring different dialing plans in the USC Gateway, digits dialed on UMA handsets can be recognized as office extensions and be forwarded to IP PBX/IP Centrex for processing.

In some examples, the extension "301" is dialed from the UMA MS 100 (Step 702). The USC Gateway 200 recognizes this as a valid extension dialing plan and forwards the call to an IP PBX 202 as a "SIP INVITE to extension 301" (Step 704). A remote office desktop IP phone 700 rings (Step 706). An SIP message that the phone is ringing is forward from the IP phone 700 to the IP PBX 202 (Step 708 to the USC Gateway 200 (Step 710) to MS 100 (Step 712). The third party answers the IP phone 700, which sends an SIP OK message to IP PBX 202 (Step 714), which forwards the OK message to USC Gateway 200 (Step 716), which sends a "Call Answered" message to MS 100 (Step 718). A UMA Voice Conversation is initiated between MS 100 and IP phone 700 (Step 720).

Without the USC Gateway acting (or proxying) as a SIP User Agent on behalf of the UMA Handset, complicated network setups are required to implement such as Mobile PBX service. Typical implementations use mechanisms such as CAMEL to trigger or force call routing to force-route the dial digits ("301") into the IP PBX or IP Centrex.

The approach described here requires no CAMEL triggers, no force-call routing, no change to UMA handset; no special software to download, and no change to UMA, GSM, IP PBX/Centrex protocols & networks. Mobile service providers only need to deploy the USC Gateway in their network to rollout Mobile/Wireless IP PBX service with UMA handsets.

Accordingly, other embodiments are within the scope of the following claims.

## Claims

1. A method comprising:
handling voice communication between a mobile station and a packet-based voice communication system including
emulating at a gateway system a communication interface for mobile station access to a telecommunication network over a public data network according to a first protocol,
communicating between the gateway and the packet-based voice communication system according to a second protocol, and
converting control communication information passing between the mobile station and the packet-based voice communication system.

2. The method of claim 1 wherein the packet-based voice communication system comprises an IP Centrex.

3. The method of claim 1 or 2 wherein the packet-based voice communication system comprises an IP PBX.

4. The method of any one of the preceding claims wherein the packet-based voice communication system comprises an IMS-based telecommunication system.

5. The method of any one of the preceding claims, wherein the first protocol comprises UMA.

6. The method of any one of the preceding claims, wherein the second protocol comprises SIP.

7. The method of any one of the preceding claims, wherein converting the control communication comprises translating between a GSM and/or GPRS messages and SIP messages.

8. A communication device comprising:
a first communication interface for mobile station access according to a first protocol for access by a mobile stations to a telecommunication network over a public data network according;
a second interface for packet-based voice communication according to a second protocol, and
a processor configured to pass control communication information between mobile stations over the first communication interface and a packet-based voice communication system over the second interface.

9. A method comprising:
accessing a data network service from a mobile terminal, including providing a gateway for converting control communications received from the mobile terminal from a first protocol to a second protocol, where the second protocol is compatible with the service.

10. The method of claim 9 wherein the second protocol is SIP.

11. The method of claim 9 or 10, wherein the mobile terminal accesses the data network service over a wireless telecommunication network.

12. The method of any one of the preceding claims 9 to 11, wherein the mobile terminal is a UMA terminal.
